# EUROPÄISCHE PATENTSCHRIFT

(11) **EP 1 412 070 B1**
(45) Veröffentlichungstag und Bekanntmachung des Hinweises auf die Patenterteilung: **12.10.2016**
(21) Anmeldenummer: 02745425.5
(22) Anmeldetag: 04.07.2002
(51) Int. Cl.: B01J 2/20, B29B 9/10, B29C 47/30

(54) **VORRICHTUNG ZUM AUSPRESSEN FLIESSFÄHIGER SUBSTANZEN**
DEVICE FOR PRESSING OUT FLOWABLE SUBSTANCES
DISPOSITIF D'EXPULSION PAR COMPRESSION DE SUBSTANCES POUVANT S'ECOULER

(30) Priorität: 27.07.2001 DE 10138333
(43) Veröffentlichungstag der Anmeldung: 28.04.2004
(73) Patentinhaber: Santrade Ltd., CH-6002 Luzern (CH)
(72) Erfinder: KLEINHANS, Matthias, 71336 Waiblingen (DE); GIERKE, Stefan, 70736 Fellbach (DE); SCHERMUTZKI, Konrad, 71686 Remseck (DE)
(74) Vertreter: Patentanwälte Ruff, Wilhelm, Beier, Dauster & Partner mbB
(86) Internationale Anmeldenummer: PCT/EP2002/007395
(87) Internationale Veröffentlichungsnummer: WO 2003/011446

(56) Entgegenhaltungen:
- EP-A- 0 145 839
- US-A- 5 382 145
- US-A- 5 492 463
- PATENT ABSTRACTS OF JAPAN vol. 016, no. 262 (M-1265), 15. Juni 1992 (1992-06-15) & JP 04 064425 A (SEKISUI CHEM CO LTD), 28. Februar 1992 (1992-02-28)

## Beschreibung

Die Erfindung betrifft eine Vorrichtung zum Auspressen fließfähiger Substanzen mit einer rotierenden zylindrischen Trommel, die am gesamten Umfang mit Durchtrittsöffnungen versehen ist, mit einer im Inneren der Trommel feststehend angeordneten Zuführeinrichtung für die Substanzen, mit einer dem Innenumfang der Trommel im unteren Bereich zugeordneten Düsenleiste mit einem Strömungskanal, der mit der Zuführeinrichtung in Verbindung steht, durch den Substanzen gleichmäßig über die axiale Länge der Trommel verteilt den Durchtrittsöffnungen zugeführt und durch diese in Tropfenform herausgedrückt werden und auf ein unter der Trommel geführtes Transport- und/oder Kühlband fallen und dort erstarren.

Eine Vorrichtung dieser Art ist aus der EP 0 145 839 A2 bekannt, bei der die gelochte Trommel am Umfang eines inneren Zylinders geführt ist, der mit einem axial von einer Stirnseite her gespeisten Zuführkanal, mit einer parallel zu diesem verlaufenden Teilkammer und mit einer in eine Nut am Außenumfang dieses Zylinders eingeschobenen Düsenleiste versehen ist, die mit mehreren axial im Abstand zueinander angeordneten Bohrungen versehen ist, die mit einer durchgehenden einer Austrittskammer bildenden Nut in der Düsenleiste in Verbindung stehen, welche am Innenumfang der rotierenden gelochten Trommel anliegt.

Vorrichtungen dieser Art haben sich als äußerst vorteilhaft zum Granulieren bestimmter Substanzen erwiesen. Die Produktionsleistung solcher Vorrichtungen ist jedoch beschränkt, weil die Drehzahl solcher rotierenden Trommeln, die in der Regel einen Durchmesser in der Größenordnung von 80 mm haben, wegen der auftretenden Zentrifugalkräfte nicht beliebig erhöht werden kann.

Es hat sich auch gezeigt, dass insbesondere beim Granulieren sedimentierender Produkte, wie beispielsweise Suspensionen, der Innenraum, insbesondere im Bereich der Düsenleiste, im Bereich seiner Durchtrittsbohrungen zum Verstopfen neigt und dass sich daher Rückstände bilden, die den Produktionsablauf beeinträchtigen können und daher in regelmäßigen Abständen entfernt werden müssen. Eine beliebige Vergrößerung der Durchtrittsöffnungen wiederum würde zu einem ungesteuerten Auspressen der Substanzen mit der Folge führen, dass die gewünschte Tropfenbildung an der Austrittsstelle über dem Kühlband nicht erreicht wird.

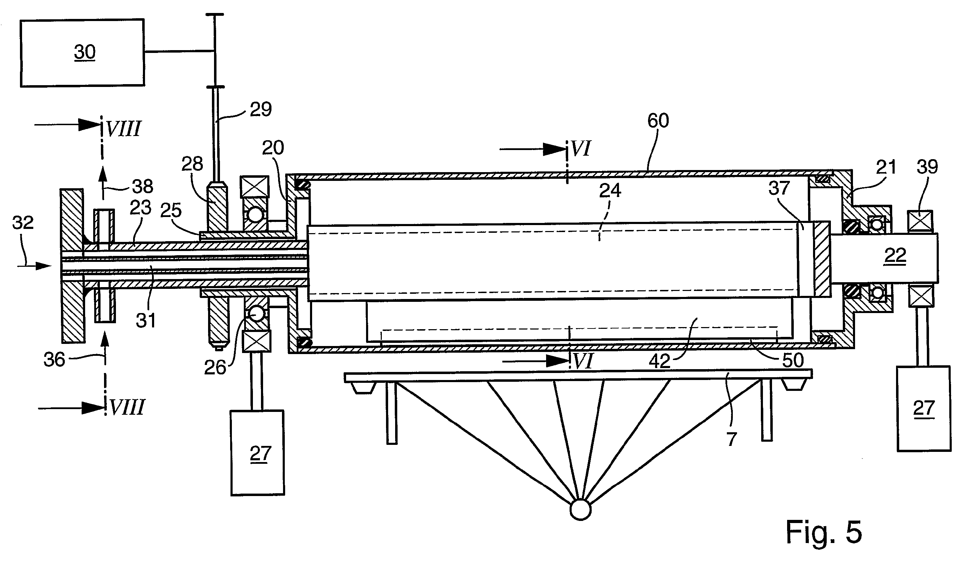

Aus der Patentschrift US 5,382,145 ist eine Vorrichtung zum Auspressen fließfähiger Substanzen mit einer rotierenden zylindrischen Trommel bekannt. Die rotierende zylindrische Trommel ist am gesamten Umfang mit Durchtrittsöffnungen versehen und hat eine im Inneren der Trommel feststehend angeordnete Zuführeinrichtung für die Substanzen. Ein Innenraum der Trommel ist im Wesentlichen vollständig durch einen massiven Zylinder ausgefüllt, in dem ein Zuführkanal ausgebildet ist. Am Ende des Zuführkanals ist eine Austrittskammer vorgesehen, die an beiden Seiten mit einem Dichtungselement begrenzt ist, wobei die Dichtungselemente auf der Innenseite der sich drehenden Trommel anliegen. Eines der Dichtungselemente kann (Fig. 5) in die Austrittskammer am Ende des Zuführkanals hineinragen und dadurch unmittelbar vor dem Austritt der Subtanz durch einen Austrittsspalt eine Umlenkung der Substanzen um 90° oder mehr als 90° bewirken. Das sich quer zu einer gedachten Verlängerung des Zuführkanals ersteckende Dichtungselement definiert zusammen mit einer Seitenwand der Austrittskammer den Austrittsspalt, an den sich in Strömungsrichtung gesehen unmittelbar die rotierende Trommel anschließt.

Mit der vorliegenden Erfindung sollen auch wesentlich größere Mengen von Substanzen als mit den bekannten Vorrichtungen einwandfrei vertropft werden können.

Die vorliegende Erfindung löst diese Aufgabe mittels einer Vorrichtung mit den Merkmalen von Anspruch 1.

Mit der vorliegenden Erfindung kann der Durchsatz der auszupressenden Substanzen jeweils auf die gewünschten Durchsatzmengen abgestimmt werden, ohne dass unterschiedliche Durchmesser der Durchtrittsbohrungen in der Düsenleiste erforderlich sind und ohne dass dadurch größere Probleme hinsichtlich der Reinigung der Düsenleiste zu erwarten sind.

In Weiterbildung der Erfindung wird bei einer Vorrichtung der eingangs genannten Art vorgeschlagen, dass im Strömungskanal der Düsenleiste
(Weiter auf Seite 3 der ursprünglichen Beschreibung)
mindestens ein einseitig befestigter und nach einer Seite abragender Staustreifen angeordnet ist, dessen freie Kante mit einer Wand des Strömungskanals einen Durchströmschlitz bildet. Diese Ausgestaltung lässt eine Abstimmung der durchströmenden Substanzmenge in den Austrittsbereich der Düsenleiste in einfacher Weise zu, dadurch dass der Durchströmschlitz mehr oder weniger breit gehalten wird, was durch einfaches Auswechseln des Staustreifens möglich wird. Dabei ist ein solches Auswechseln wegen der nur einseitigen Befestigung relativ einfach, und es wird auch möglich, in relativ einfacher Weise eine Reinigung vorzunehmen. Zudem können in ihrem Durchmesser auf die auszupressende Menge abgestimmte Durchtrittsbohrungen in der Düsenleiste vermieden werden. Der Strömungskanal in der Düsenleiste kann einen großen Querschnitt aufweisen und dient, da der die Durchtrittsmenge bestimmende Durchströmschlitz erst hinter diesen Strömungskanälen liegt, als eine Art Beruhigungsstrecke für die Zuführung der auszupressenden Massen. Diese Strömungskanäle neigen wegen ihres größeren Querschnittes auch nicht zur Verstopfung.

Es hat sich als vorteilhaft erwiesen, wenn der Durchströmschlitz auf der Seite der Düsenleiste liegt, die in Drehrichtung der Trommel gesehen die Vorderkante der Düsenleiste bildet. Durch diese Ausgestaltung wird in relativ einfacher Weise erreicht, dass sich die gesamte Austrittsnut der Düsenleiste, die dem Innenumfang der drehbaren Trommel gegenüberliegt, mit der auszupressenden Substanz füllt, so dass, je nach Breite dieser Austrittsnut, auch genügend Zeit zur Verfügung gestellt werden kann, dass die auszupressenden Substanzen die Durchtrittsöffnungen der drehbaren Trommel durchdringen und in Tropfenform abfallen.

Der Staustreifen lässt sich in Weiterbildung der Erfindung in einfacher Weise mit Hilfe von Schrauben befestigen, die von der offenen Seite der Austrittsnut durch Öffnungen im Bereich einer Staustreifenkante hindurchgeführt sind. Diese Art der Befestigung ist einfach und ermöglicht ein schnelles Auswechseln. In vorteilhafter Weise können auch zwei Staustreifen hintereinander jeweils so angeordnet werden, dass ihr Durchströmschlitz auf entgegengesetzten Seiten liegt. Auf diese Weise entsteht eine Art Labyrinth, das von der auszupressenden Masse vor Erreichen der Durchtrittsöffnungen der drehbaren Trommel durchströmt werden muss. Dies führt zu einer Beruhigung der Strömung, die insbesondere wenn höhere Durchsätze gewünscht sind, für die einwandfreie Tropfenbildung entscheidend ist.

In Weiterbildung der Erfindung lässt sich der Staustreifen auch schräg zur Zuströmungsrichtung der Substanzen so anordnen, dass die freie Streifenkante stromab von der befestigten Kante liegt. Der Staustreifen dient dann auch als Strömungsleitmittel, das ebenfalls zu einer Strömungsberuhigung der austretenden Substanzen führen kann. Insbesondere bei einer solchen Ausgestaltung kann auch in Weiterbildung der Erfindung vorgesehen werden, dass die von der Austrittsnut der Düsenleiste abgewandten Seite des Staustreifens Vorsprüngen am Nutgrund gegenüberliegt, die mindestens einen, vorzugsweise aber mehrere in Strömungsrichtung hintereinander liegende Stauschlitze mit dem Staustreifen bilden. Diese in Strömungsrichtung hintereinander liegenden Drosselstellen können auch, je nach Viskosität und Beschaffenheit der auszupressenden Substanz, als Strömungsberuhigungsmittel eingesetzt werden.

Die Erfindung ermöglicht es aber auch, größere Mengen von Substanzen durchzusetzen, ohne dass die Strömungsverhältnisse etwa durch Erhöhung der Reynoldszahl in den Turbulenzbereich geraten und eine einwandfreie Vertropfung gefährden können.

In Weiterbildung der Erfindung wird vorgesehen, dass das Verhältnis der Durchmesser der Durchtrittsöffnungen zum Trommeldurchmesser größer als 1:150 ist und dass zwischen der Düsenleiste und einem im Trommelinneren axial verlaufenden Zuführrohr, das den Innenraum der Trommel aber nicht ausfüllt, ein Zwischenstück mit einem Verbindungskanal vorgesehen ist, in dem mindestens eine Staustrecke zur zusätzlich Beruhigung und Verteilung auf die axiale Länge der durchströmenden Substanzen vorgesehen ist. Dieser Verbindungskanal kann in Weiterbildung der Erfindung als über nahezu die ganze axiale Länge der Trommel durchgehender Kanal ausgeführt sein, der sich in Strömungsrichtung keilförmig verengt. Es hat sich gezeigt, dass durch eine solche Ausgestaltung, bei der ein wesentlich größerer Durchmesser der drehbaren Trommel gegenüber bisher bekannten Bauarten vorgesehen sein kann, auch wesentlich größere Mengen von Substanzen einwandfrei vertropft werden können, weil dafür gesorgt wird, dass die Strömungsverhältnisse der auszupressenden Substanzen im laminaren Bereich verbleiben können und so keine Gefahr zu erwarten ist, dass der Tropfvorgang nicht in der gewünschten Weise stattfindet. Dabei wird auch der Vorteil erzielt, dass wegen des deutlich größeren Durchmessers der rotierenden Trommel, der nun bei etwa 250 mm oder dergleichen liegen kann, auch eine außerordentliche Stabilität und eine größere Festigkeit erzielt werden kann, auch wenn die Materialstärke der Trommel gegenüber bekannten Bauarten nicht wesentlich erhöht wird. Diese größere Festigkeit lässt die Realisierung größerer axialer Längen und damit größerer Bandbreiten zu, so dass auch durch diese Maßnahmen die Produktion erhöht werden kann. Wegen der eingesetzten größeren Durchmesser der drehbaren Trommel kann die Drehzahl derselben trotz Produktionserhöhung noch in einem Bereich gehalten werden, in dem auch die Zentrifugalkräfte beherrschbar sind, so dass die neue Vorrichtung zur Bildung von Granulat wegen der kleineren Umfangsgeschwindigkeiten auch nicht dazu neigt, außen an der Trommel gegebenenfalls anhaftendes Material radial abspritzen zu lassen.

Die Verwendung größerer Trommeldurchmesser stellt auch im Trommelinneren ausreichend Platz zum Einbau zur Verfügung, so dass eine solche Vorrichtung sehr montagefreundlich wird, auch wenn die Außenabmessungen sich vergrößern. Das axial im inneren Hohlraum der Trommel verlaufende Zuführrohr muß mit einer gesonderten Heizung versehen werden. Es verbleibt aber genügend Raum im Inneren der Trommel für eine solche Anordnung, die sich auch auf das radial verlaufende und zur Düsenleiste führende Zwischenstück erstrecken kann.

Die Erfindung ist anhand von Ausführungsbeispielen in der Zeichnung dargestellt und wird im folgenden erläutert. Es zeigen:
- Fig. 1: den schematischen Querschnitt durch eine als sogenannter Rotoformer bezeichnete Vorrichtung nach der Erfindung,
- Fig. 2: die Teilansicht in Richtung des Pfeiles II auf die in der Vorrichtung nach Fig. 1 verwendete Düsenleiste,
- Fig. 3: den Schnitt durch die Düsenleiste gemäß der Schnittlinie III-III in Fig. 2,
- Fig. 4: die Draufsicht auf die Düsenleiste in Richtung des Pfeiles IV, wobei - wie auch in Fig. 2 - die in Fig. 1 vorgesehenen weiteren Teile weggelassen sind,
- Fig. 5: einen Längsschnitt durch eine andere Ausführungsform nach der Erfindung, bei der im Vergleich zu Fig. 1 ein wesentlich größerer Durchmesser der rotierenden Trommel vorgesehen ist,
- Fig. 6: die vergrößerte Darstellung eines Querschnittes durch die Vorrichtung nach Fig. 5 in Richtung der Linie VI-VI geschnitten,
- Fig. 7: eine Teilansicht der bei der Ausführungsform der Fig. 6 vorgesehenen Düsenleiste in Richtung des Pfeiles IX gesehen, jedoch ohne den eingesetzten Staustreifen und ohne das zur Aufnahme der Düsenleiste dienende Zwischenstück und die rotierende Trommel,
- Fig. 8: eine schematische Darstellung des Schnittes durch die Ausführungsform der Fig. 5 in Richtung der Schnittlinie XIII-XIII,
- Fig. 9: die Ansicht auf Düsenleiste und Zwischenstück der Ausführungsform der Fig. 6 in Richtung des Pfeiles IX gesehen, wobei die rotierende Trommel weggelassen wurde und nur ein Teilbereich dargestellt ist,
- Fig. 10: die Draufsicht auf das Zwischenstück der Vorrichtung der Fig. 6 in Blickrichtung der Pfeile X,
- Fig. 11: einen Querschnitt durch eine Düsenleiste, ähnlich der Darstellung in Fig. 6, jedoch bei einer anderen Ausführungsform,
- Fig. 12: den Querschnitt einer weiteren Ausführungsform der Düsenleiste und
- Fig. 13: ebenfalls eine weitere Ausführungsform einer Düsenleiste, ähnlich den Fig. 11 und 12.

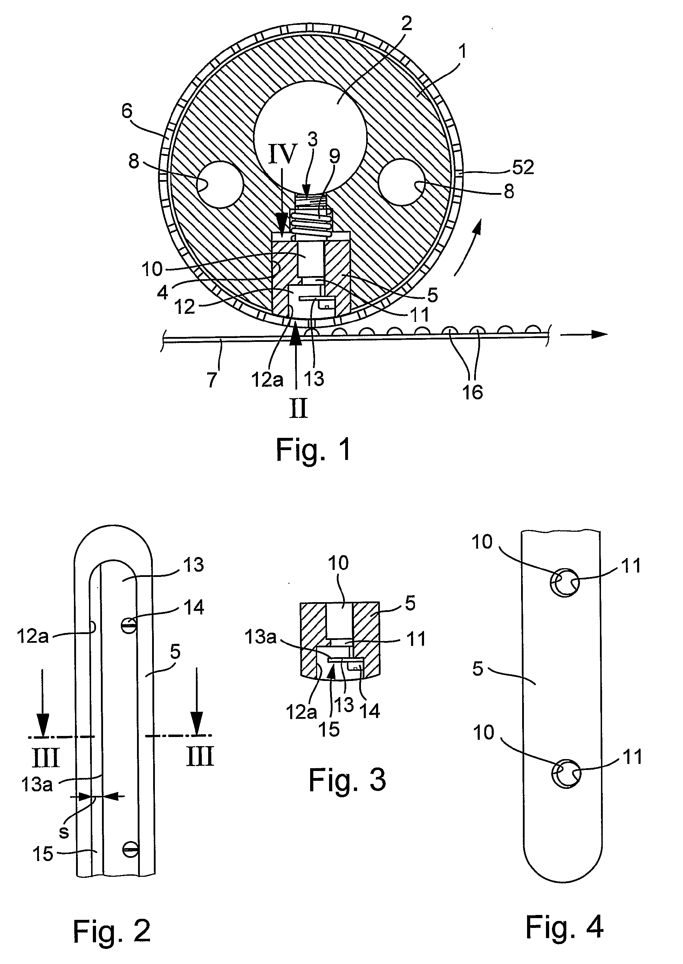

Fig. 1 läßt erkennen, dass der im Querschnitt dargestellte Rotoformer im Prinzip aus drei Teilen besteht; zum einen aus einem feststehenden zylindrischen Innenkörper 1, der mit einem axial verlaufenden Zuführkanal 2 für die zu granulierende Substanz, mit einem radial von diesem Zuführkanal 2 abzweigenden Strömungskanal 3 und einer an diesen angrenzenden Ausnehmung 4, die bis zum Außenumfang des Innenteils 1 durchgeht, sowie aus einer in dieser Ausnehmung 4 radial verschiebbar gehaltenen Düsenleiste 5,
aus einer um den zylindrischen Innenkörper 1 rotierenden Trommel 6 und aus einem unter dieser Trommel geführten Kühl- und Transportband 7. Der Innenkörper 1 ist mit zwei parallel zum Zuführkanal verlaufenden Heizkanälen 8 ausgerüstet, und die Düsenleiste 5 wird durch eine Druckfeder 9 in der Ausnehmung 4 radial nach außen gedrückt, so dass sie am Innenumfang der rotierenden Trommel 6 anliegt.

Die Düsenleiste 5 ist ihrerseits nochmals in den Fig. 2 bis 4 gezeigt, und es ist erkennbar, dass sie mit Verbindungsbohrungen 10 versehen ist, die in Durchtrittsöffnungen 11 etwas kleineren Durchmessers übergehen. Diese Durchtrittsöffnungen 11 münden in einer nutförmigen Ausnehmung 12, die zum rotierenden Innenumfang der Trommel offen ist. In dieser Ausnehmung ist ein Staustreifen 13 mit Hilfe von Schrauben 14 befestigt, die im Bereich einer Seitenkante durch den Streifen 13 geführt und im Körper der Düsenleiste 5 verschraubt sind. Die Schrauben 14 sind dabei von der offenen Seite der Ausnehmung 12 her zugänglich. Die nicht befestigte und freie Kante 13a des Staustreifens 13 bildet mit der Wand 12a der Ausnehmung 12 einen Durchströmschlitz 15 mit der Breite s. Dieser Durchströmschlitz 15 stellt eine Drosselstelle für das durch den Zuführkanal 2 kommende zu vertropfende Material dar und bestimmt zusammen mit der temperaturbedingten Viskosität der zu granulierenden Substanz und dem Druck die entstehende Form der Tropfen 16, die auf dem Band 7 erstarren und dann in bekannter Weise verpackt werden können.

Wie ohne weiteres erkennbar ist, ist die Breite s des Schlitzes 15 durch die Breite des Staustreifens 13 bestimmbar. Es ist auch zu erkennen, dass dieser Staustreifen 13 in einfacher Weise in die Düsenleiste 5 einsetzbar ist. Auch eine Reinigung ist wegen der guten Zugänglichkeit ohne weiteres möglich, wenn sie erforderlich ist.

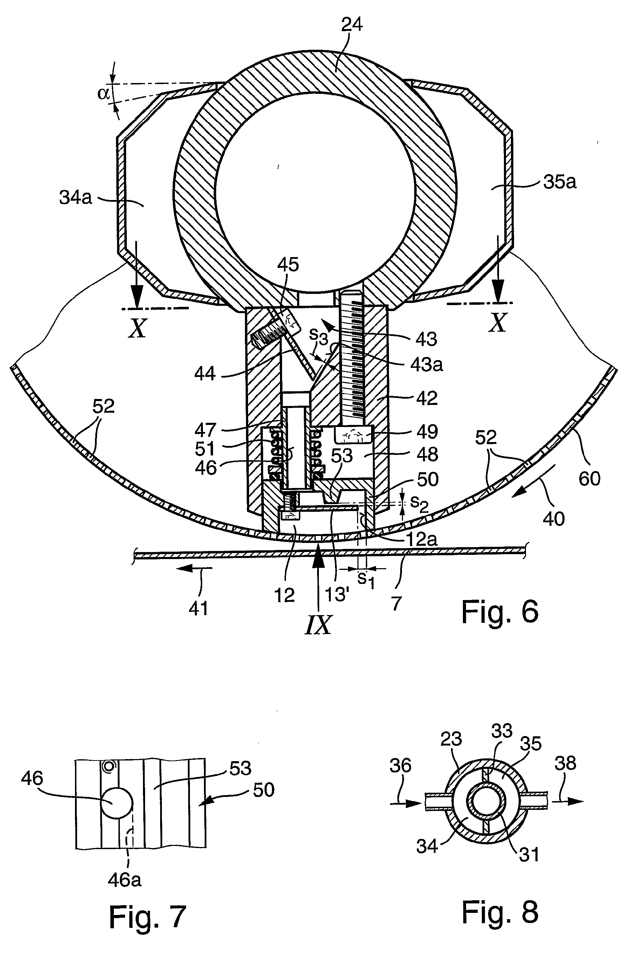

Die Fig. 5 und 6 zeigen eine andere Ausführungsform eines sogenannten Rotoformers, bei dem auf die Führung der rotierenden Trommel 60 am Umfang eines Innenkörpers 1 - wie in Fig. 1 - verzichtet worden ist. Die gelochte Trommel 60 ist vielmehr im Bereich ihrer beiden Stirnseiten auf Flansche 20 und 21 aufgezogen, die ihrerseits mit Nabenteilen auf Wellenstummeln 22 bzw. 23 gelagert sind, welche axial von einem Zuführrohr 24 abragen, das im Hohlraum der Trommel 60 mit Abstand zu dessen Innenumfang koaxial zur Trommel 60 verläuft. Die mit dem Flansch 20 verbundene Nabe 25 ist dabei zum einen auf einem Lager 26 gehalten, das mit ortsfesten Stützen 27 in Verbindung steht. Die Nabe 25 ist auch mit einem Antriebsrad 28 versehen, das über einen nicht näher dargestellten Riemen oder Kettentrieb 29 und einen Antriebsmotor 30 in Drehung gesetzt werden kann. Der Wellenstummel 23 des Zuführrohres 24 ist als Rohr ausgebildet, welches ein koaxial verlaufendes Innenrohr 31 (siehe auch Fig. 8) umgibt, das als Zuführkanal für die zu granulierenden Substanzen dient und in den rohrförmigen Zuführkanal 24 mündet. Die zu granulierende Substanz wird im Sinn des Pfeiles 32 von außen zugeführt. Um eine Abkühlung der Substanz zu verhindern bzw. dieselbe zu temperieren, ist eine Beheizung des Rohres 31 und des Zuführrohres 24 vorgesehen, die durch die beiden vom Wellenstummel 23 und vom Zuführrohr 31 und eine Trennwand 33 (Fig. 8) begrenzten Innenräume 34, 35 und durch die das innere Zuführrohr 24 umgebenden Hohlräume 34a und 35a gebildet wird. Ein Heizmedium wird im Sinn des Pfeiles 36 in den Raum 34 zugeführt, durchströmt den Raum 34 und den Raum 34a bis zu einer Endwand 37 und wird dann wieder zurück zum Eingang geführt, wo es den Raum 35 im Sinn des Pfeiles 38 durch einen entsprechenden Abflussstutzen verlässt.

Der Wellenstummel 22 des Zuführrohres 24 ist in einem Lager 39 ebenfalls auf einem ortsfesten Ständer 27 gehalten und dient zur Lagerung der Nabe des Flansches 21.

Wie die Fig. 6 zeigt, wird innerhalb des Hohlraumes der Trommel 60, die im Sinn des Pfeiles 40 so gedreht wird, dass ihre Umfangsgeschwindigkeit in der gleichen Richtung wie die Bewegung des Bandes 7 im Sinn des Pfeiles 41 verläuft, mit einem sehr großen Durchmesser versehen, so dass im Innenraum der Trommel 60 viel Platz besteht, der die Montage der Vorrichtung relativ einfach macht. Der große Trommeldurchmesser erlaubt es auch, die axiale Länge der Trommel verhältnismäßig groß zu machen, ohne auf Festigkeitsprobleme zu stoßen. Dies wiederum bedeutet, dass auch die Breite des Bandes 7 relativ groß gewählt werden kann. Dies bedeutet, dass schon aus diesem Grund eine Erhöhung der Produktion möglich ist. Eine Produktionserhöhung ist aber auch wegen des gewählten größeren Durchmessers der Trommel möglich, weil nun auch die Möglichkeit besteht, die Umfangsgeschwindigkeit zu erhöhen, ohne dass die Zentrifugalkräfte wegen einer zu hohen Drehzahl zu groß werden. Dazu kommt auch, dass nun der Bereich der Trommel, der dem darunter vorbeigeführten Band 7 zugewandt wird und der noch nahe genug am Band liegt, um den Tropfvorgang zu bewirken, wegen der größeren Krümmung dieses Trommelbereiches ebenfalls größer wird, so dass auch die Breite der Düsenleiste in der Bewegungsrichtung 41 des Bandes 7 gesehen, wesentlich größer werden kann, was ohne weiteres aus einem Vergleich der Fig. 1 und 6 ersichtlich ist.

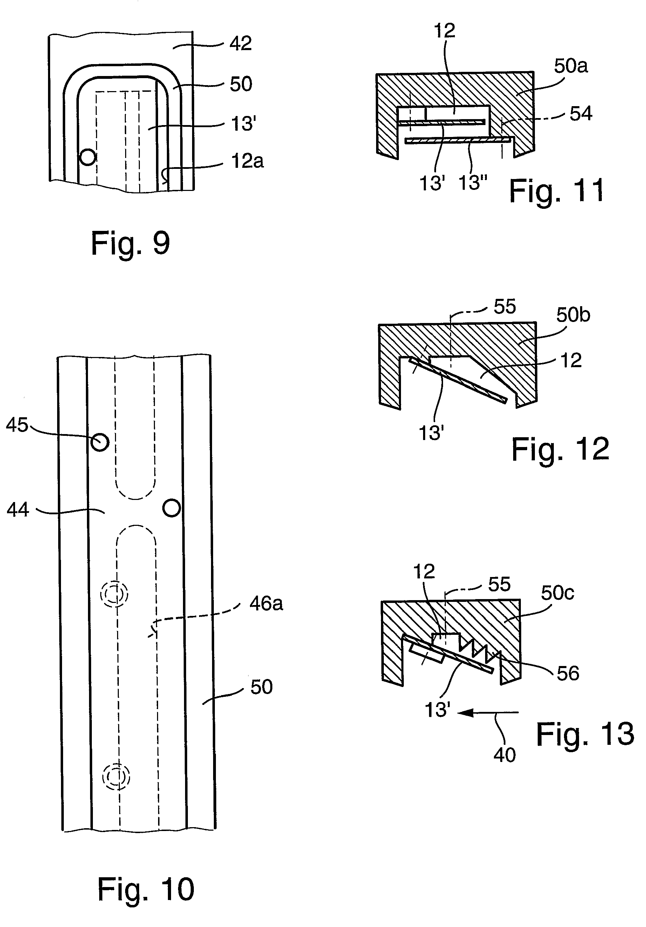

Um den Abstand zwischen dem Zuführrohr 24 und dem unteren Bereich der Trommel 60 zu überbrücken, ist ein Zwischenstück 42 vorgesehen, das die Form einer etwa der Breite des Bandes 7 entsprechenden Leiste aufweist. Das Zwischenstück 42 ist, wie Fig. 6 und 10 zeigen, an dem dem Zuführrohr 24 zugewandten Bereich mit einem sich nach unten keilförmig verengenden Einlaufbereich 43 versehen, in den eine Leitplatte 44 hereinragt, die in ähnlicher Weise wie der Staustreifen 13' nur an einer Kante mit Schrauben 45 befestigt ist. Zwischen der freien Kante des Leitbleches 44 und der schrägen Wand 43a des keilförmigen Einlaufbereiches entsteht ein Spalt S₃, der zur Dosierung der in den nachgeordneten Bereich eintretenden Menge der zu vertropfenden Substanz dienen kann. Der keilförmige Einlaufbereich 43 geht, wie Fig. 7 oder Fig. 10 zeigen, entweder in eine als zylindrische Bohrung 46 oder als Langloch 46a ausgebildete Öffnung in einem Verbindungsstück 47 über, das in eine Ausnehmung 48 des Zwischenstückes 42 hereinragt, in der auch eine Befestigungsschraube 49 zum Befestigen des Zwischenstückes 42 am Rohr 24 untergebracht ist. In der mit parallelen Wänden versehenen Ausnehmung 48 ist die Düsenleiste 50 verschiebbar angeordnet, die mit Hilfe einer Druckfeder 51 nach unten und mit ihren beiden die nutartige Ausnehmung 12 begrenzenden Schenkeln gegen den inneren Umfang der Trommel 60 gedrückt wird. Durch die Feder 51 wird gleichzeitig das Verbindungsstück 47 in seiner Lage gehalten.

Die Düsenleiste 50 ist, wie auch schon die Düsenleiste 5, im Abstand zu ihrem Boden mit dem Staustreifen 13' versehen, dessen freie Kante mit der Wand 12a einen Spalt mit der Breite S₁ bildet. In gleicher Weise, wie das schon anhand von Fig. 1 erläutert worden ist, kann dieser Spalt zur Dosierung der durch die Öffnungen 52 der Trommel 60 herausgedrückten Masse dienen. Auch hier ist der Spalt S₁ auf der Seite der Düsenteiste 50 angeordnet, die in der Drehrichtung 40 der Trommel 60 bzw. in der Bewegungsrichtung 41 des Bandes 7 gesehen, die erste Innenkante der Düsenleiste 50 ist.

Wie Fig. 6 aber auch zeigt, ist es möglich, am Boden der nutartigen Ausnehmung 12 auch noch einen leistenartigen Vorsprung 53 anzubringen, der mit dem Staustreifen 13' einen weiteren Spalt mit der Breite S₂ bildet. Dieser Spalt dient zur Beruhigung der durchströmenden Menge und dazu, dass die strömende Substanz vor diesem Spalt in einer Beruhigungsstrecke, die hier innerhalb des Strömungskanales 46 und hinter dem Leitblech 44 liegt, aufgestaut wird. Diese Maßnahme führt dazu, dass auch bei insgesamt relativ großen Durchsatz der zu verarbeiteten Substanz laminare Strömungen beibehalten werden, welche die Garantie für die gewünschte Tropfenbildung im Bereich zwischen den beiden Seitenwänden der Düsenleiste 50 geben.

Die Fig. 11 bis 13 zeigen anderen Ausgestaltungen der Düsenleiste 50, die daher mit den Referenznummern 50a, 50b und 50c versehen worden sind.

Im Fall der Fig. 11 ist die Düsenleiste 50a zum einen mit einem ersten Staustreifen 13' in etwa in der Weise versehen, wie das auch in Fig. 6 der Fall ist. Die Durchtrittsöffnungen 43 und die nutartige Aussparung 12 sind dabei in den Fig. 11 bis 13 nicht im einzelnen dargestellt. In der Fig. 11 ist die Düsenleiste 50a aber noch mit einem zweiten Staustreifen 13" versehen, der ebenfalls nur einseitig, in diesem Fall an einem Absatz 54, im Bereich einer der Schenkel der C-förmig ausgebildeten Düsenleiste 50a angebracht ist. Auf diese Weise bilden die Staustreifen 13' und 13" jeweils zwei Durchtrittsspalte mit jeweils einer der Wände der Aussparung 12 und zwischen sich einen labyrinthartigen Durchgang für die zu vertropfende Substanz. Eine solche Ausgestaltung dient zur Strömungsberuhigung, wenn das je nach Viskosität der zu verarbeitenden Substanz notwendig sein sollte.

Die Fig. 12 zeigt eine Düsenleiste 50b, bei der der Staustreifen 13' schräg zu der in Richtung der Achse 55 stattfindenden Zuströmung geneigt ist und zwar so, dass seine freie Kante in Strömungsrichtung tiefer als die befestigte Kante liegt. Der Staustreifen 13' dient so als ein Strömungsleitblech. Er dient auch zur Drosselung der durchströmenden Menge und kann in dieser Ausgestaltung ebenfalls in Abhängigkeit von den Strömungseigenschaften und der Durchflussmenge der zu verarbeitenden Substanz eingesetzt werden.

Das gilt auch für die Düsenleiste 50c nach Fig. 13, bei der der Staustreifen 13' in gleicher Weise wie in Fig. 12 schräg zur Strömungsrichtung eingesetzt ist. Hier allerdings ist die Ausnehmung 12 der Düsenleiste 50c mit mehreren hintereinander angeordneten und jeweils zum Staustreifen 13' hin gerichteten Rippen 56 versehen, die jeweils für sich Durchtrittsspalte mit der Oberfläche des Staustreifens 13' bilden. Auch diese Maßnahme ist eine solche, die zur Beruhigung der Durchströmung dienen kann und damit dazu, die Tropfenbildung bei einer Vorrichtung ähnlich Fig. 6 nicht durch zu große Strömungsgeschwindigkeiten in unerwünschter Weise zu beeinflussen.

## Patentansprüche

1. Vorrichtung zum Auspressen fließfähiger Substanzen mit einer rotierenden zylindrischen Trommel (6, 60), die am gesamten Umfang mit Durchtrittsöffnungen (52) versehen ist, mit einer im Inneren der Trommel feststehend angeordneten Zuführeinrichtung (2, 24) für die Substanzen, mit einer dem Innenumfang der Trommel im unteren Bereich zugeordneten Düsenleiste (5, 50, 50a, 50b, 50c) mit einem Strömungskanal (12), der mit der Zuführeinrichtung (2, 24) in Verbindung steht, durch den die Substanzen gleichmäßig über die axiale Länge der Trommel verteilt den Durchtrittsöffnungen (52) zugeführt und durch diese in Tropfenform herausgedrückt werden und auf ein unter der Trommel geführtes Transport- und/oder Kühlband (7) fallen und dort erstarren,
**dadurch gekennzeichnet,dass**
der Durchmesser der Trommel (60) größer oder gleich 90 mm ist, dass zwischen der Düsenleiste (50) und einem im Trommelinneren axial verlaufenden Zuführrohr (24) ein separates Zwischenstück (42) mit einem Verbindungskanal (43, 46, 12) vorgesehen ist, in dem mindestens eine Staustrecke zur Beruhigung und Verteilung der durchströmenden Substanz auf die axiale Länge vorgesehen ist und dass im Strömungskanal (12) der Düsenleiste (5, 50) mindestens ein einseitig befestigter und abragender Staustreifen (13, 13') angeordnet ist, dessen freie Kante mit einer Wand (12a) des Strömungskanales einen Durchströmschlitz (15) bildet.

2. Vorrichtung nach Anspruch 1, **dadurch gekennzeichnet, dass** der Durchströmschlitz (15) auf der Seite der Düsenleiste (50, 5) liegt, die in Drehrichtung (40) der Trommel (6, 60) gesehen die Vorderkante der Düsenleiste bildet.

3. Vorrichtung nach Anspruch 2, **dadurch gekennzeichnet, dass** die Befestigung der Staustreifen (13, 13') mit Hilfe von Schrauben erfolgt, die von der offenen Seite des als nutartige Vertiefung (12) ausgebildeten Strömungskanals der Düsenleiste zugängig sind.

4. Vorrichtung nach Anspruch 1, **dadurch gekennzeichnet, dass** zwei Staustreifen (13', 13") hintereinander mit je einem Durchströmschlitz auf entgegengesetzten Seiten der Düsenleiste (50a) vorgesehen sind.

5. Vorrichtung nach Anspruch 1, **dadurch gekennzeichnet, dass** der Staustreifen (13') schräg zu der Achse (55) des Zuströmkanales der Düsenleiste (50b, 50c) so angeordnet ist, dass die freie Streifenkante stromab von der befestigten Kante liegt.

6. Vorrichtung nach Anspruch 1 und 2, **dadurch gekennzeichnet, dass** die dem Grund der nutartigen Ausnehmung (12) der Düsenleiste (50c) zugewandte Seite des Staustreifens (13') rippenartigen Vorsprüngen (56) gegenüberliegt, die vom Nutgrund aus abragen und mindestens einen, vorzugsweise aber mehrere in der Strömungsrichtung hintereinander liegende Stauschlitze mit dem Staustreifen (13') bilden.

7. Vorrichtung nach Anspruch 1, **dadurch gekennzeichnet, dass** der Verbindungskanal (43) als ein über nahezu die ganze axiale Länge der Trommel (60) durchgehender Kanal ausgebildet, der sich in Strömungsrichtung keilförmig verengt.

8. Vorrichtung nach Anspruch 1, **dadurch gekennzeichnet, dass** mehrere in Axialrichtung versetzt zueinander angeordnete Verbindungsöffnungen (46, 46a) im Zwischenstück (42) vorgesehen sind.

9. Vorrichtung nach Anspruch 1, **dadurch gekennzeichnet, dass** die Wandstärke der Trommel (60) zwischen 1,5 mm und 5 mm, vorzugsweise bei 2 mm liegt.

10. Vorrichtung nach Anspruch 1, **dadurch gekennzeichnet, dass** der Durchmesser der Trommel zwischen 90 und 1500 mm, vorzugsweise bei 300 - 400 mm liegt.

## Claims

1. A device for extruding flowable substances comprising a rotating cylindrical drum (6, 60) provided with apertures (52) over the entire circumference, a feed device (2, 24) for the substances fixedly arranged inside the drum, and a nozzle strip (5, 50, 50a, 50b, 50c) with a flow channel (12) connected to said feed device (2, 24) and arranged at the lower region of the inner circumference of the drum through which the substances are fed uniformly distributed across the axial length of the drum to the apertures (52), where the substances are forced out from said apertures in the shape of droplets and fall on a conveyor and/or cooling belt (7) moving under the drum and solidify thereon,
**characterized in that**
the diameter of the drum (60) is greater than or equal to 90 mm, and **in that** a separate transition piece (42) with a connecting passage (43, 46, 12) is provided between the nozzle strip (50) and a feed tube (24) extending axially inside said drum, in which passage at least one restricting path is provided to calm and distribute the through-flowing substance over the axial length, and **in that** at least one unilaterally attached and projecting restricting strip (13, 13') is arranged in the flow channel (12) of the nozzle strip (5, 50), and the free end of the strip forms a flow-through slot (15) with a wall (12a) of the flow channel.

2. The device according to claim 1, **characterized in that** the flow-through slot (1S) lies on the side of the nozzle strip (50, 5) that forms the front edge of said nozzle strip, as viewed in the rotating direction (40) of the drum (6, 60).

3. The device according to claim 2, **characterized in that** the restricting strips (13, 13') are fastened by means of screws, which are accessible from the open side of the flow channel of said nozzle strip designed as a groove-like recess (12).

4. The device according to claim 1, **characterized in that** two restricting strips (13', 13") disposed one behind the other are provided with one flow-through slot, respectively, on opposite sides of the nozzle strip (50a).

5. The device according to claim 1, **characterized in that** the restricting strip (13') lying at an angle to the axis (55) of the inflow channel of the nozzle strip (50b, 50c) is arranged in such a manner that the free strip edge lies downstream from the attached edge.

6. The device according to claim 1 and 2, **characterized in that** the side of the restricting strip (13') facing the bottom of the groove-like recess (12) of the nozzle strip (50c) lies opposite the rib-like projections (56), which project from the groove bottom and which form together with the restricting strip (13') at least one restricting slit, but preferably a plurality of restricting slits, lying one behind the other in the flow direction.

7. The device according to claim 1, **characterized in that** the connecting passage (43) is designed as a passage extending nearly through the entire axial length of the drum (60) whereby said passage narrows wedge-like in the flow direction.

8. The device according to claim 1, **characterized in that** a plurality of connecting apertures (46, 46a) arranged offset in axial direction are provided in said transition piece (42).

9. The device according to claim 1, **characterized in that** the thickness of the wall of said drum (60) lies between 1.5 mm and 5 mm, preferably 2 mm.

10. The device according to claim 1, **characterized in that** the diameter of the drum lies between 90 mm and 1500 mm, preferably 300 to 400 mm.

## Revendications

1. Dispositif de pressage de substances coulantes, comprenant un tambour (6, 60) cylindrique en rotation qui est muni sur tout son pourtour d'ouvertures de passage (52), comprenant un appareil d'amenée (2, 24) pour les substances disposé en position fixe à l'intérieur du tambour, comprenant une rampe de buses (5, 50, 50a, 50b, 50c) associée au pourtour intérieur du tambour dans la zone inférieure et munie d'un canal d'écoulement (12) qui est en liaison avec l'appareil d'amenée (2, 24), à travers lequel les substances sont acheminées aux ouvertures de passage (52) en étant distribuées de manière régulière sur la longueur axiale du tambour et sont extraites par pression en forme de gouttes à travers celles-ci, puis chutent sur une bande transporteuse et/ou de refroidissement (7) passant sous le tambour et s'y solidifient,
**caractérisé en ce que**
le diamètre du tambour (60) est égal ou supérieur à 90 mm, **en ce qu'**entre la rampe de buses (50) et un tube d'amenée (24) qui s'étend dans le sens axial à l'intérieur du tambour se trouve une pièce intermédiaire (42) séparée munie d'un canal de liaison (43, 46, 12), dans lequel se trouve au moins un tronçon d'accumulation destiné à stabiliser et à répartir la substance qui s'écoule sur la longueur axiale, et **en ce que** dans le canal d'écoulement (12) de la rampe de buses (5, 50) est disposée au moins une bande d'accumulation (13, 13') fixée et faisant saillie unilatéralement, dont le bord libre forme une fente de passage d'écoulement (15) avec une paroi (12a) du canal d'écoulement.

2. Dispositif selon la revendication 1, **caractérisé en ce que** la fente de passage d'écoulement (15) se trouve sur le côté de la rampe de buses (50, 5) qui, vue dans le sens de rotation (40) du tambour (6, 60), forme le bord avant de la rampe de buses.

3. Dispositif selon la revendication 2, **caractérisé en ce que** la fixation de la bande d'accumulation (13, 13') est effectuée à l'aide de vis qui sont accessibles depuis le côté ouvert du canal d'écoulement de la rampe de buses, lequel est réalisé sous la forme d'un enfoncement (12) de type rainure.

4. Dispositif selon la revendication 1, **caractérisé en ce que** deux bandes d'accumulation (13', 13") sont disposées l'une derrière l'autre, chacune comprenant une fente de passage d'écoulement sur des côtés opposés de la rampe de buses (50a).

5. Dispositif selon la revendication 1, **caractérisé en ce que** la bande d'accumulation (13') est disposée en biais par rapport à l'axe (55) du canal d'arrivée de la rampe de buses (50b, 50c) de telle sorte que le bord libre de la rampe se trouve en amont du bord fixé.

6. Dispositif selon la revendication 1 et 2, **caractérisé en ce que** des parties en saillie (56) de type nervure se trouvent à l'opposé du côté de la bande d'accumulation (13') qui fait face au fond de la cavité (12) de type rainure de la rampe de buses (50c), lesquelles font saillie depuis la base de la rainure et forment avec la bande d'accumulation (13') au moins une, mais de préférence plusieurs fentes d'accumulation disposées les unes derrière les autres dans le sens de l'écoulement.

7. Dispositif selon la revendication 1, **caractérisé en ce que** le canal de liaison (43) est réalisé sous la forme d'un canal continu sur quasiment toute la longueur axiale du tambour (60), lequel canal se rétrécit en forme de coin dans le sens de l'écoulement.

8. Dispositif selon la revendication 1, **caractérisé en ce que** plusieurs ouvertures de liaison (46, 46a) disposées décalées les unes des autres dans le sens axial se trouvent dans la pièce intermédiaire (42).

9. Dispositif selon la revendication 1, **caractérisé en ce que** l'épaisseur de paroi du tambour (60) est comprise entre 1,5 mm et 5 mm, de préférence est de l'ordre de 2 mm.

10. Dispositif selon la revendication 1, **caractérisé en ce que** le diamètre du tambour est compris entre 90 et 1500 mm, de préférence est de l'ordre de 300 - 400 mm.
